# EUROPÄISCHE PATENTSCHRIFT

(11) **EP 0 724 326 B1**
(45) Veröffentlichungstag und Bekanntmachung des Hinweises auf die Patenterteilung: **15.10.1997**
(21) Anmeldenummer: 96810002.4
(22) Anmeldetag: 05.01.1996
(51) Int. Cl.: H02K 15/03, H02K 3/22, H02K 3/50

(54) **Verfahren zum Reparieren einer Anschlussvorrichtung für den Stromanschluss und zur Zuführung bzw. Abführung der Kühlflüssigkeit zu bzw. von den hohlen Teilleitern der Statorwicklungsstäbe elektrischer Maschinen**
Method for repairing the connection device connecting the current and supplying, respectively educting, the cooling liquid to, respectively from, the hollow conductors of the stator winding rods of electrical machines
Procédé pour la réparation d'un dispositif connecteur pour la connexion de courant et l'alimentation, respectivement l'évacuation, du liquide de refroidissement des conducteurs creux des barres d'enroulements de stators de machines électriques

(30) Priorität: 26.01.1995 DE 19502308
(43) Veröffentlichungstag der Anmeldung: 31.07.1996
(73) Patentinhaber: ASEA BROWN BOVERI AG, 5400 Baden (CH)
(72) Erfinder: Thiard-Laforet, Alfred, Midlothian, VA 32112 (US); Zerlik, Willibald, CH-5242 Birr (CH)

(56) Entgegenhaltungen:
- EP-A- 0 175 083
- DE-A- 2 803 015
- US-A- 4 133 559

## Beschreibung

### TECHNISCHES GEBIET

Die Erfindung bezieht sich auf ein Verfahren zum Reparieren einer Anschlussvorrichtung für den Stromanschluss und zur Zuführung bzw. Abführung der Kühlflüssigkeit zu bzw. von den hohlen Teilleitern der Statorwicklungsstäbe elektrischer Maschinen, bei welcher Anschlussvorrichtung die hohlen und gegebenenfalls bei einer Statorwicklung, die neben hohlen Teilleitern auch massive Teilleiter umfasst, alle Teilleiter von einem metallischen Bauteil umfasst sind und mit diesem und untereinander verlötet sind, welches Bauteil die Teilleiter unter Bildung einer Wasserkammer überragt, und in einer Anschlussarmatur zur Kühlflüssigkeitszufuhr bzw. Kühlfüssigkeitsabfuhr endet.

### TECHNOLOGISCHER HINTERGRUND UND STAND DER TECHNIK

Im Statorwickelkopf wassergekühlter elektrischer Maschinen wird die Kühlflüssigkeit von ringförmigen Sammelleitungen über Isolierschläuche den sogenannten Wasserkammern am Ende der Leiterstäbe zugeführt. Die Wasserkammer wird durch eine Anschlussvorrichtung gebildet, bei der die hohlen Teilleiter von einem metallischen Bauteil umfasst sind und mit diesem und untereinander verlötet sind. Das metallische Bauteil überragt die Teilleiter unter Bildung dieser Wasserkammer. Es endet in einer Anschlussarmatur zur Kühlflüssigkeitszufuhr bzw. Kühlfüssigkeitsabfuhr. Die Anschlussvorrichtung dient gleichzeitig auch als Stromanschluss. Ein Verfahren zur Herstellung einer solchen Anschlussvorrichtung ist aus der deutschen Offenlegungsschrift DE-A-2 803 015 bekannt.

Die Anschlussvorrichtung ist während des Betriebes hohen mechanischen Belastungen (Schwingungen) ausgesetzt. Bereits minimste Leckagen führen zu Folgeschäden an der elektrischen Maschine. Treten solche Schäden auf, müssen die Lötverbindungen - sofern überhaupt möglich - erneuert werden. Meist bleibt nur der Ausbau oder gar der vollständige Ersatz der Statowicklung. Es besteht daher ein grosses Bedürfnis nach einem Reparaturverfahren, das ohne Ausbau der Statorwicklung durchgeführt werden kann.

### KURZE DARSTELLUNG DER ERFINDUNG

Der Erfindung liegt die Aufgabe zugrunde, ein Verfahren zum Reparieren einer Anschlussvorrichtung der eingangs genannten Gattung anzugeben, das einfach durchgeführt werden kann und ohne Ausbau oder gar Ersatz der Statorwicklung auskommt, dabei aber leckagefreie Lötverbindungen ermöglicht.

Diese Aufgabe wird erfindungsgemäss durch ein Reparaturverfahren gelöst, das die folgenden Schritte umfasst:
- Entfernen der vorhandenen Anschlussvorrichtung vom Stabende durch induktive Erwärmung;
- Reinigung des Stabendes im dem Bereich, wo die neue Anschlussvorrichtung befestigt werden soll;
- materialabtragende Bearbeitung der Stirnfläche des Stabendes, insbesondere durch Fräsen;
- Einbringen von schmalen Nuten zwischen benachbarte Teilleiter in die Stirnseite des Stabes in Quer- und Hochrichtung;
- Aufschieben eines ersten Anschlussteils, welches das Stabende vollständig umfasst;
- Ausfüllen von verbleibenden Spalten zwischen dem ersten Anschlussteil und den Aussenflächen des Stabendes mit Kupfer- und/oder Lötfolie;
- Ausfüllen der in die Stirnseite des Stabes eingebrachten schmalen Nuten mit Kupfer- und/oder Lötfolie;
- Induktive Erwärmung des ersten Anschlussteils und des Stabendes und Verlöten unter Zugabe von Lötmittel;
- zumindest visuelle Inspektion der so geschaffenen Lötverbindung;
- Anbringen eines zweiten Anschlussteils an die freie Stirnfläche des ersten Anschlussteils durch Löten;
- Prüfen der auf diese Weise geschaffenen Anschlussvorrichtung auf Dichtigkeit.

Der Erfindung liegt dabei die Ueberlegung zugrunde, mit einem Minimum an Modifikationen an der bestehenden Anschlussvorrichtung auszukommen und dabei jederzeit die Kontrolle über die Qualität der Reperaturmassnahmen zu behalten. Dazu gehört u.a. die bewusste Schaffung von sauberen, definierten vergleichsweise grossflächigen Lötstellen und die Möglichkeit, die entstandenen Spalte mit Füllstreifen aus Kupfer und Löthilfsmittel oder einer Kombination aus beiden so auszufüllen, dass nur noch extrem kleine Spalte verbleiben, die später beim Löten infolge Kapillarwirkung restlos ausgefüllt werden. Ferner ist die Zweiteilung der Anschlussvorrichtung hervorzuheben, welche die Zugänglichkeit und damit Inspizierbarkeit der zu schaffenden Lötverbindungen jederzeit erlaubt. Diese Zweiteilung ermöglicht darüber hinaus auch grosse Flexibilität in der Gestaltung der beiden Anschlussteile, insbesondere auch hinsichtlich ihrer Trennflächen. Diese können so gelegt werden, dass zum einen das Verlöten/Prüfen des ersten Anschlussteils einfach durchzuführen ist, zum anderen der zweite Anschlussteil quasi "nahtlos" die Verbindung zu den vorhandenen Kühlmittelleitungen und auch den Stromanschlüssen ermöglicht.

Ausführungsbeispiele der Erfindung sowie weitere damit erzielbare Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Längschnitt durch eine bekannte Anschlussvorrichtung für den Stromanschluss und zur Zuführung bzw. Abführung der Kühlflüssigkeit zu bzw. von den hohlen Teilleitern der Statorwicklungsstäbe elektrischer Maschinen;
- Fig.2: einen Querschnitt durch die Anschlussvorrichtung gemäss Fig.1 längs deren Linie AA;
- Fig.3: einen Querschnitt durch das Stabende nahe der Stirnfläche nach Einbringen von Nuten zwischen benachbarten Teilleitern;
- Fig.4: einen Längsschnitt durch das Stabende gemäss Fig.3;
- Fig.5: einen Längschnitt durch eine zweiteilige Anschlussvorrichtung, wie sie für das erfindungsgemässe Reparaturverfahren verwendet wird, wobei in die Stirnfläche des Leiterstabes eingebrachte Nuten mit besonderen Füllstücken ausgefüllt sind;
- Fig.6: das Detail X aus Fig.5 in vegrössertem Massstab;
- Fig.7: einen Längschnitt durch eine zweiteilige Anschlussvorrichtung, wie sie für das erfindungsgemässe Reparaturverfahren verwendet wird, wobei in Abwandlung zu Fig.5 und 6 die Hohlleiterenden nachträglich aufgeweitet wurden;
- Fig.8: einen Längschnitt durch das Stabende von Fig.7 nahe der Stirnfläche nach Einbringen von Bohrungen am Zusammentreffen von vier Hohlleitern und anschliessendem Ausfüllen dieser Bohrungen mit Kupferrundmaterial;
- Fig.9: einen Querschnitt durch das Stabende gemäss Fig.8 längs deren Linie BB.
- Fig. 10: einen Längsschnitt durch eine Anschlussvorrichtung, bei welcher die Trennfläche zwischen beiden Anschlussteilen in Richtung Anschlussarmatur verlegt ist;
- Fig.ll: einen Querschnitt durch das Stabende eines Statorwicklungsstabes, der neben hohlen Teilleitern auch massive Teilleiter enthält.

### WEGE ZUR AUSFÜBRUNG DER ERFINDUNG

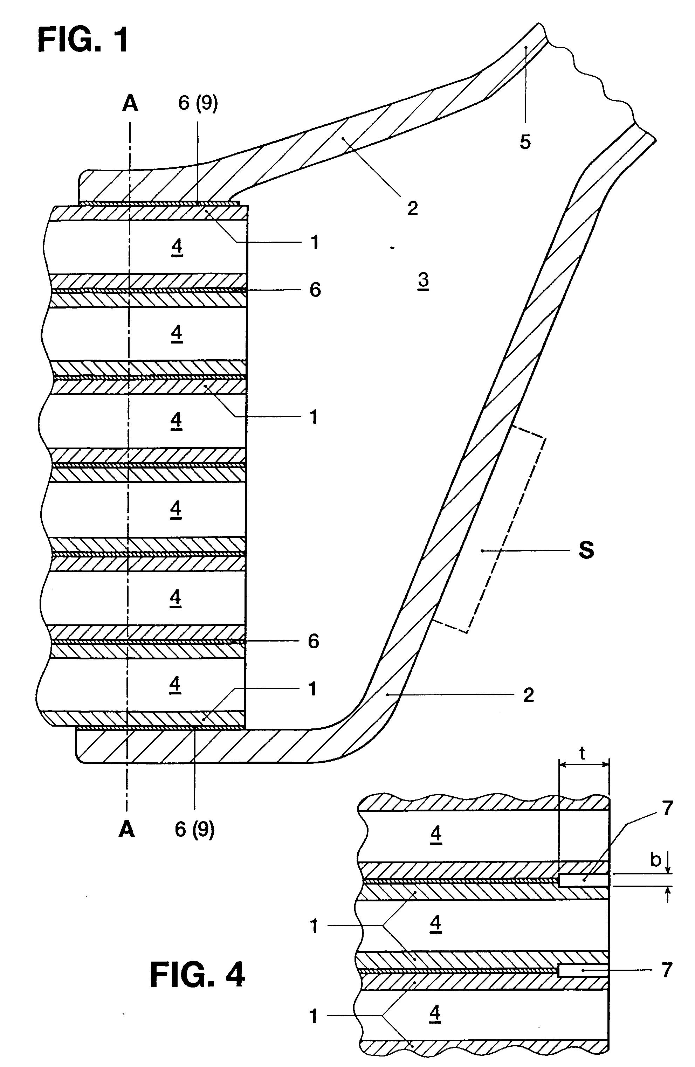

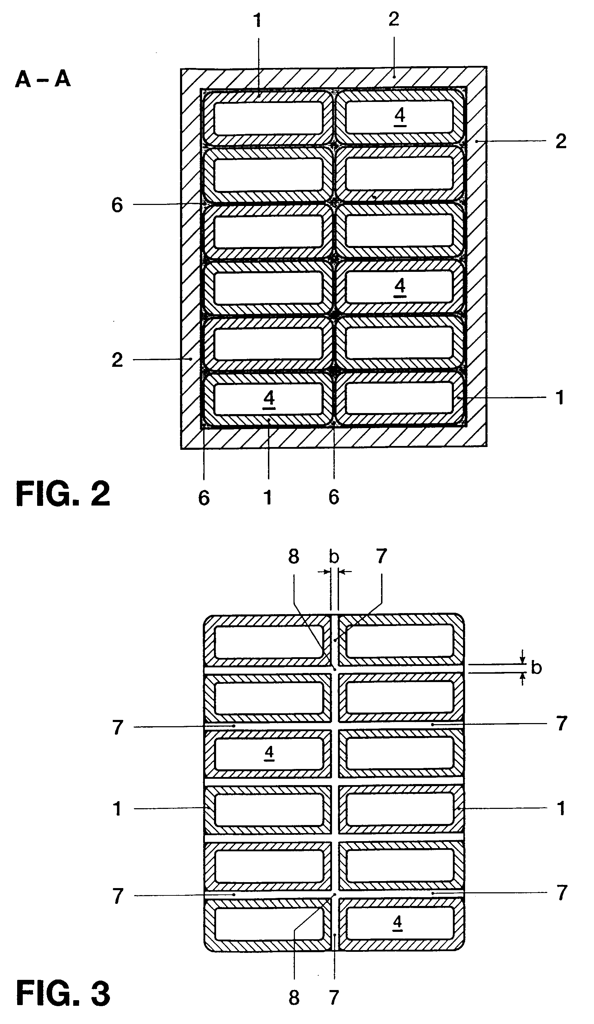

Ausgangsobjekt für das im folgenden zu beschreibende Reparaturverfahren ist eine bekannte Anschlussvorrichtung für den Stromanschluss und zur Zuführung bzw. Abführung der Kühlflüssigkeit aus den Hohlleitern der Statorwicklungsstäbe einer elektrischen Maschine, wie sie in Fig.1 und 2 schematisch dargestellt ist.

Der im Beispielsfall nur aus hohlen Teilleitern 1 aufgebaute Statorwicklungsstab ist an seinem Ende mit einer Anschlussvorrichtung in Gestalt eines metallischen Bauteils 2 versehen. Dieses umfasst die Gesamtheit aller Teilleiter 1, überragt sie nach aussen hin unter Bildung einer Wasserkammer 3, in welche die Kühlkanäle 4 in den Teilleitern 1 münden, und endet in einer Anschlussarmatur 5 zur Kühlflüssigkeitszufuhr bzw. Kühlfüssigkeitsabfuhr. Die Teilleiter 1 sind unter sich und mit dem metallischen Bauteil hartverlötet. Die in Fig.1 und Fig.2 übertrieben gross dargestellten, mit Lot gefüllten Lötspalte sind mit 6 bezeichnet. Der Stromanschluss S (in Fig.1 strichliert angedeutet) der Anschlussvorrichtung befindet sich im Beispielsfall auf der Aussenseite der Wasserkammer 3 und ist in Fig.1 weggelassen worden, weil er für das Verständnis der Erfindung nicht erforderlich ist.

Nach längerer Betriebszeit der Maschinen können nun Leckagen an den Lötverbindungen auftreten. Auch kann die Wandung der Wasserkammer 3 selbst undicht werden, wenn diese - wie bei vielen älteren Maschinen üblich - aus Kupferguss besteht. Die Folge ist, dass Kühlwasser in den Wickelkopfraum oder - was weit gefährlicher ist - in den Leiterstab gelangt, was unter allen Umständen vermieden werden muss. Der Austausch derartiger Anschlussvorrichtungen ist aufgrund der beengten Platzverhältnisse im Wickelkopfraum äussert mühsam. Ein Ausbau der Statorwicklung kommt in der Regel aus wirtschaftlichen Gründen nicht in Frage. Hier setzt nun die Erfindung ein.

Das erfindungsgemässe Reparaturverfahren stellt sich zusammengefasst wie folgt dar und umfasst im wesentlichen folgende Verfahrensschritte:
a) Entfernen der vorhandenen Anschlussvorrichtung (metallisches Bauteil 2) vom Stabende durch induktive Erwärmung;
b) Reinigung des Stabendes im dem Bereich, wo die neue Anschlussvorrichtung befestigt werden soll;
c) materialabtragende Bearbeitung der Stirnfläche des Stabendes, insbesondere durch Fräsen;
d) Einbringen von schmalen Nuten 7 zwischen benachbarte Teilleiter 1 in die Stirnseite des Stabes in Quer- und Hochrichtung, um bis zu einer vorgegebenen Tiefe "altes" Lot zwischen den Teilleitern zu entfernen;
e) Aufschieben eines ersten Anschlussteils 2a aus Kupfer, welches das Stabende vollständig umfasst;
f) Ausfüllen von verbleibenden Spalten zwischen dem ersten Anschlussteil 2a und den Aussenflächen des Stabendes mit Kupfer- und/oder Lötfolie;
g) Ausfüllen der in die Stirnseite des Stabes eingebrachten schmalen Nuten 7 mit Kupfer- und/oder Lötfolie oder ein Kombination aus beiden;
h) Induktive Erwärmung des ersten Anschlussteils 2a und des Stabendes und Verlöten unter Zugabe von Lötmittel;
i) zumindest visuelle Inspektion der so geschaffenen Lötverbindung;
j) Anbringen eines zweiten Anschlussteils 2b aus Kupfer an die freie Stirnfläche des ersten Anschlussteils 2a durch Löten;
k) Prüfen der auf diese Weise geschaffenen Anschlussvorrichtung auf Dichtigkeit.

Im Schritt a) wird das metallische Bauteil 2 auf induktivem Wege bis zur Schmelztemperatur des Lötmittels erwärmt und vom Stabende abgezogen. Vorrichtungen zum gezielten lokalen Erwärmen von Bauteilen und Lötverbindungen sind zum Stand der Technik zu zählen und werden aus diesem Grunde nicht näher erläutert.

Danach schliesst sich als Schritt b) die mechanische Reinigung der Lötstelle an, was z.B. durch Bürsten oder Schmirgeln erfolgen kann. Dabei wird das verzunderte Material und poröses altes Lötmittel bis auf das blanke Kupfer bzw. blanke Lot entfernt.

Daran anschliessend - Schritt c) - wird die Stirnfläche des Leiterstabes durch spanabhebende Bearbeitung, vorzugsweise durch Fräsen, bis zum Erreichen einer sauberen Kupferoberfläche bearbeitet.

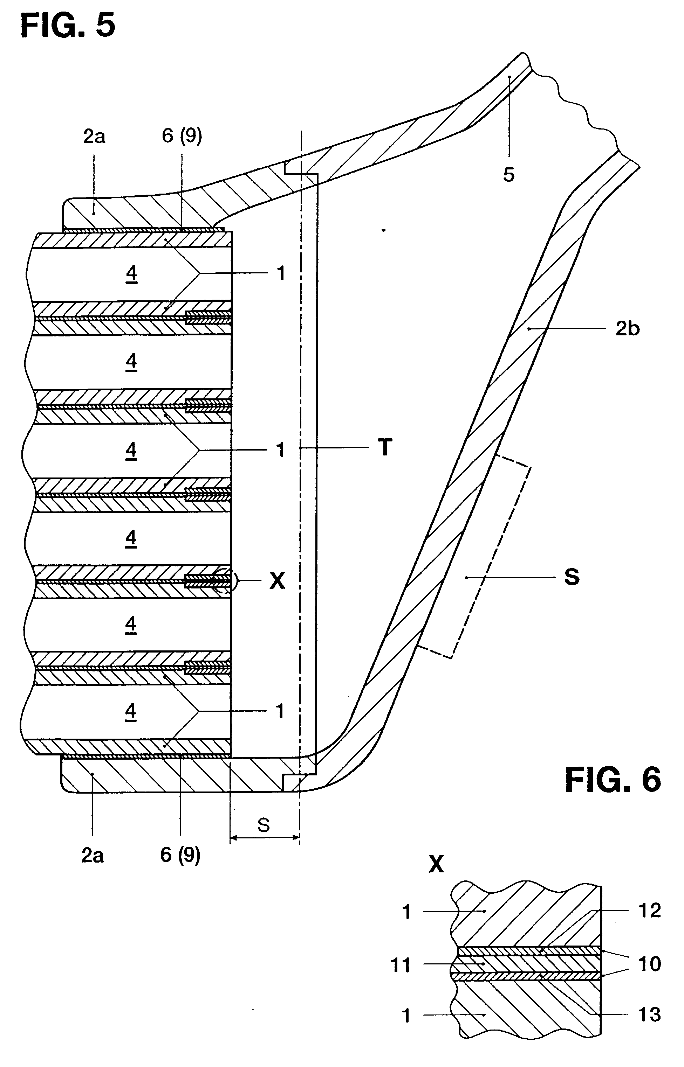

Im Schritt d) werden nun schmale Nuten 7 mit einer Breite b≈0,5 mm und einer Tiefe t≈10 - 15 mm in die ehemaligen Lötspalte zwischen aneinandergrenzenden Teilleitern 1 eingebracht, wie es in Fig.3 und 4 dargestellt ist. Dies kann mit einem an einer Hilfseinrichtung am Stabende befestigten Scheibenfräser erfolgen. Wesentlich dabei ist, dass die Breite b der Nuten so bemessen ist, dass bei dem Fräsvorgang die Aussenwandung der hohlen Teilleiter mit erfasst wird, so dass die Seitenwand der Nut 7 bis auf die Kreuzungsstellen 8, wo vier Teilleiter aneinanderstossen, bis auf das Leiterkupfer bearbeitet wird.

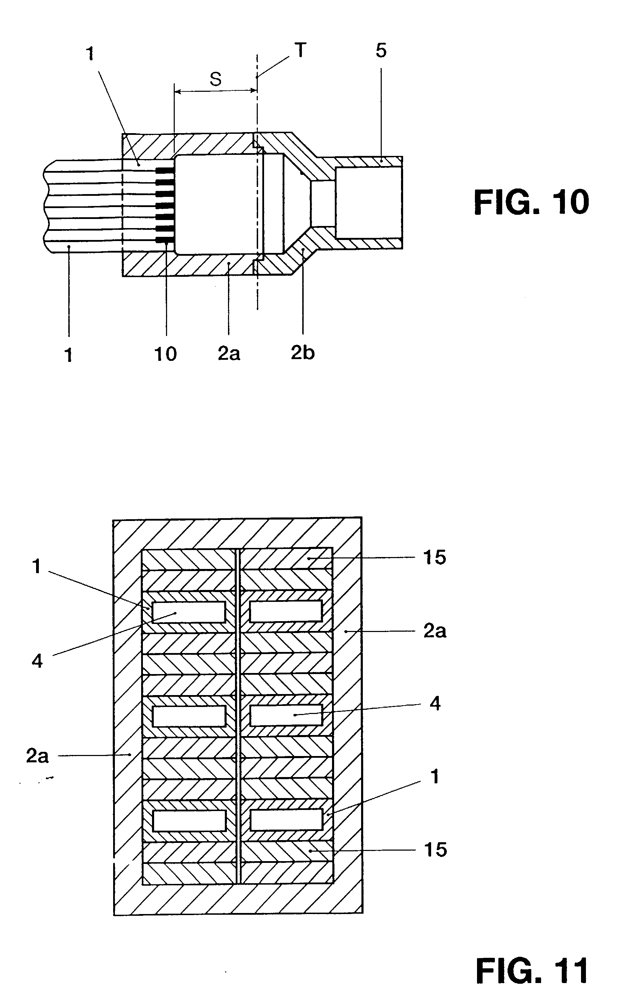

Im Schritt e) wird nun die eine Hälfte 2a eines metallischen Anschlussteils auf das auf diese Weise vorbereitete Stabende aufgeschoben. Diese ist aus massivem gewalztem Kupfer gefertigt und durch spanabhebende Bearbeitung in die entsprechende Form gebracht, ist also kein Gussteil. Die Bohrung in dieser ersten Hälfte entspricht am stabseitigen Ende in ihren Dimensionen weitgehend dem Original-Stabende. Es überragt das Stabende eine gewissen Strecke s. Das Ueberstehmass ist mit Rücksicht auf das spätere Anbringen des zweiten Anschlussteils 2b so gross wie möglich zu wählen, was später noch im Zusammenhang mit Fig.10 zu erörtern ist.

Nun werden (Schritt f) möglicherweise noch verbleibende Spalte zwischen der Innenwand des ersten Anschlussteils 2a und allen Aussenflächen des Leiterstabes mit ersten Füllstreifen 9 ausgefüllt. Diese ersten Füllstreifen 9 sind unter der Bezeichnung SILFOS bekannt geworden und werden in vielerlei Zusammensetzungen und Dicken zwischen 0,1 mm und 1 mm angeboten. Im Bedarfsfall können auch zusätzlich Kupferfolienstreifen verwendet werden, um auch grössere Spalte möglichst vollständig auszufüllen.

Im Schritt g) werden nun die Nuten 7 mit zweiten Füllstreifen 10 ausgefüllt. Weil hier nun die (auszufüllende) Nutbreite b durch das Fräswerkzeug gegeben und damit definiert ist, kommen hier vorzugsweise Füllstreifen 10 in Betracht, die aus einer mittleren Kupferschicht 11 mit beidseits angeordneten Lötmittelschichten 12, 13 bestehen, wie es aus der Detaildarstellung in Fig.6 zu entnehmen ist. Damit wird erreicht, dass die Lötspalte möglicht klein gehalten werden, so dass beim Lötvorgang alle Spalte aufgrund der Kapillarwirkung ausgefüllt werden.

Das so vorbereitete Stabende mit aufgeschobenem ersten Anschlussteil 2a wird nun induktiv erwärmt und unter Zugabe von Lötmittel verlötet (Schritt h). Bei sorgfältiger Ausführung besteht an sich keine Gefahr, dass Lötmittel in die Kühlkanäle 4 eindringt und sich dort festsetzt, zumal die Stabenden horizontal verlaufen. Diese Gefahr besteht auch deshalb nicht, weil die Innenwand der Kühlkanäle sich im vorangegangenen Betrieb mit einer Oxidschicht überzogen haben, die eine Benetzung durch das Lötmittel verhindert.

Nach dem Verlöten des ersten Anschlussteils 2a werden nun im Schritt i) alle Lötstellen inspiziert und auf Porenfreiheit untersucht. Optinal kann schon in diesem Stadium eine Dichtigkeitsprüfung durchgeführt werden, z.B. durch provisorisches Verschliessen des ersten Anschlussteils und Abpressen beispielsweise mit Heliumgas, z.B. von der anderen Maschinenseite her.

Nach Abschluss der Inspektion und gegebenenfalls nach dem Nachbehandeln der Lötstellen wird nun im Schritt j) das zweite Anschlussteil 2b auf das erste Anschlussteil 2a unter Zwischenschaltung von Lötfolien (in Fig.5 nicht eingezeichnet) aufgesetzt und mit diesem verlötet. Auch dieses zweite Teil ist wie das erste aus massivem Kupfer gefertigt und durch spanabhebende Bearbeitung in die entsprechende Form gebracht, ist als kein Gussteil. Aus Gründen der Vollständigkeit sei noch darauf hingewiesen, dass der Stromanschluss bei dieser und allen weiteren Varianten am zweiten Anschlussteil 2b erfolgt, und das zweite Anschlussteil 2b bereits vor dem Verlöten mit dem ersten vorbereitet wurde. Zur Vergrösserung der miteinander zu verlötetenden Stirnflächen beider Anschlussteile 2a, 2b und Vereinfachung der gegenseitigen Justage sind diese an ihren Stirnflächen gestuft. Das für diese Verbindung verwendete Hartlot kann dabei eine geringere Schmelztemperatur aufweisen als das für die Verlötung des ersten Anschlussteils 2a mit dem Stabende, um eine Beschädigung jener Hartlötverbindungen zu verhindern. Hierbei kommen Hartlote zum Einsatz, die einen erhöhten Silberanteil aufweisen.

Nach Fertigstellung aller Lötverbindungen schliesst sich die Endkontrolle gemäss Schritt k), bei welcher neben einer optischen Kontrolle auch das Prüfen auf Dichtigkeit durch Abpressen mit beispielsweise Heliumgas durchgeführt wird.

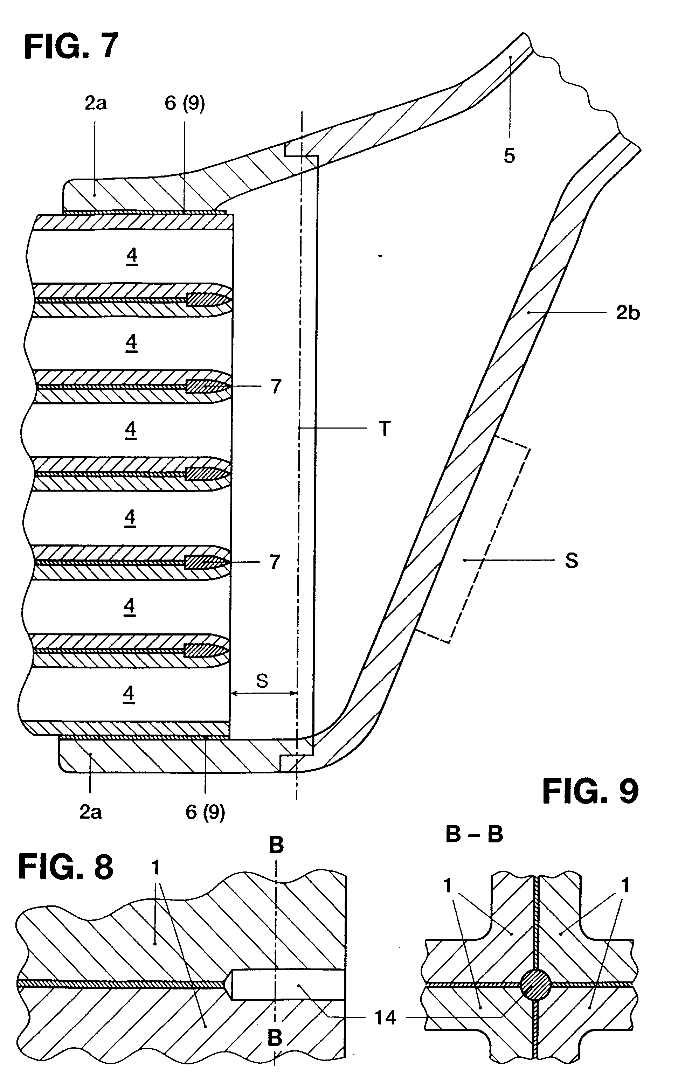

Neben dem im vorangegangenen beschriebenen Reparaturverfahren, das derzeit von der Anmelderin als bevorzugt angesehen wird, ist die folgende Abwandlung möglich, ohne den von der Erfindung gesteckten Rahmen zu verlassen. Diese Modifikation betrifft insbesondere den Verfahrensschritt g). Sie ist in den Figuren 7 bis 9 beispielsweise veranschaulicht.

Nach dem Aufschieben des ersten Anschlussteils 2a und Ausfüllen eventuell verbleibender Spalte zwischen diesem und den Aussenflächen des Stabendes werden in die Nuten 7 "gewöhnliche" Lötfolienstreifen von etwa 01, mm Dicke eingelegt. Dann werden die hohlen Teilleiter 1 an ihrem strinseitigen Ende aufgeweitet, bis die im Schritt 4 eingefrästen Nuten 7 an der Strinseite geschlossen sind (vgl. Fig.7, in welcher die übertrieben breit dargestellten Nuten bereits mit Hartlot gefüllt sind. Die verbleibenden kritischen Spalte 8 am Zusammentreffen von vier benachbarten Leitern , welche durch diese Aufweitung nicht geschlossen werden können, werden nun bis zu einer Tiefe von etwa 13 bis 15 mm aufgebohrt. Es hat sich dabei gezeigt, dass es ausreicht, dies mit einem Bohrer von 1 bis 1,5 mm zu bewerkstelligen. In diese Bohrungen werden nun 13 bis 15 mm lange Stifte 14 aus Kupferundmaterial eingesetzt (vgl. Fig.8 und 9) und auf diese Weise die Spalte geschlossen. Zweck dieser Vorgegensweise ist es, alle Spalte praktisch zu verschliessen, um für das flüssige Lot Kapillaren zu schaffen, in die es hineinflieesen kann und auch darin verbleibt. Daran schliessen sich die Schritte h) bis k) in der geschilderten Weise an.

Wie bereits eingangs dargelegt, sind beim erfindungsgemässen Reparaturverfahren zwei zeitlich und auch räumlich auseinanderliegende Lötvorgänge durchzuführen. Bei derartigem Vorgehen besteht stets die Gefahr, dass bei einem späteren Lötvorgang die Qualität der vorangegangen Lötung beeinträchtigt wird. Im vorliegenden Fall lässt sich diese Gefahr einerseits durch entsprechende Auswahl des Schmelzpunktes des Hartlotes vermeiden. Eine andere Möglichkeit besteht darin, die Anschlussvorrichtung, genauer die Lage der Trennflächen der beiden Anschlussteile 2a und 2b, so auszubilden, dass die zweite Lötstelle möglichst weit von der ersten entfernt liegt, also die Distanz s (vgl. Fig.5 bzw. 7) zu vergrössern. Dies ist jedoch von den konstruktiven Gegebenheiten um Ort der Reparatur abhängig. Bei Anschlussvorrichtungen mit vergleichsweise grosser Ausladung, wie sie in Fig.10 schematisch dargestellt ist, kann die Trennfläche T der beiden Anschlussteile 2a und 2b sehr weit von der Stirnfläche des Leiterstabes weg und hin zur Anschlussarmatur 5 verlegt sein. Am beschriebenen Reparaturverfahren ändern sich jedoch nichts, höchstens mit der Ausnahme, dass nunmehr für beide Hartlötungen einunddasselbe Lötmittel verwendet werden kann

Das erfindungsgemässe Reparaturverfahren wurde im vorstehenden anhand eines nur aus hohlen Teilleitern 1 bestehenden Leitstabes beschrieben. Es versteht sich von selbst, dass sich das Verfahren auch für Statorwicklungsstäbe eignet, die neben hohlen Teilleitern 1 auch massive Teilleiter 15 aufweisen (vgl. Figll). Bei einer derartigen Anordnung werden der erfindungsgemässen Lehre folgend nach Entfernen der ursprünglichen Anschlussvorrichtung, Reinigung der Aussenflächen des Stabendes und Planfräsen dessen Strinseite schmale Nuten zwischen alle Teilleitern 1, 15, also auch zwischen benachbarten hohlen und massiven bzw. zwischen zwei benachbarten massiven Teilleitern 15 eingebracht. Die zu Schritt g) angegebene Alternative (Füllen der Nuten nur mit Lötfolie und Aufweiten der hohlen Teilleiter 1 ist hier zwar möglich, hängt aber von der Verteilung der hohlen Teilleiter im Leiterstab selbst ab.

Wesentlich bei allen Ausführungsvarianten der Erfindung ist in jedem Fall dafür zu sorgen, dass alle früheren Lötstellen bis zu einer vorbestimmten Tiefe vom Stabende aus gesehen bearbeitet und damit für das "neue" Lötmittel gut benetzbar sind, und dass alle für das Löten zu grosse Spalte vermieden oder ausgefüllt sind (Kapillar-Lötung).

## Patentansprüche

1. Verfahren zum Reparieren einer Anschlussvorrichtung für den Stromanschluss und zur Zuführung bzw. Abführung der Kühlflüssigkeit zu bzw. von den hohlen Teilleitern der Statorwicklungsstäbe elektrischer Maschinen, bei welcher Anschlussvorrichtung die hohlen und gegebenenfalls bei einer Statorwicklung, die neben hohlen Teilleitern auch massive Teilleiter umfasst, alle Teilleiter von einem metallischen Bauteil umfasst sind und mit diesem und untereinander verlötet sind, welches Bauteil die Teilleiter unter Bildung einer Wasserkammer überragt und in einer Anschlussarmatur zur Kühlflüssigkeitszufuhr bzw. Kühlfüssigkeitsabfuhr endet, gekennzeichnet durch folgende Verfahrensschritte:
a) Entfernen der vorhandenen Anschlussvorrichtung (2) vom Stabende durch induktive Erwärmung;
b) Reinigung des Stabendes im dem Bereich, wo die neue Anschlussvorrichtung befestigt werden soll;
c) materialabtragende Bearbeitung der Stirnfläche des Stabendes, insbesondere durch Fräsen;
d) Einbringen von schmalen Nuten (7) zwischen benachbarte Teilleiter (1) in die Stirnseite des Stabes in Quer- und Hochrichtung;
e) Aufschieben eines ersten Anschlussteils (2a) aus Kupfer, welches das Stabende vollständig umfasst;
f) Ausfüllen von verbleibenden Spalten zwischen dem ersten Anschlussteil (2a) und den Aussenflächen des Stabendes mit Kupfer- und/oder Lötfolie;
g) Ausfüllen der in die Stirnseite des Stabes eingebrachten schmalen Nuten (7) mit Kupfer- und/oder Lötfolie (10) oder ein Kombination aus beiden;
h) Induktive Erwärmung des ersten Anschlussteils (2a) und des Stabendes und Verlöten unter Zugabe von Lötmittel;
i) zumindest visuelle Inspektion der so geschaffenen Lötverbindung;
j) Anbringen eines zweiten Anschlussteils (2b) aus Kupfer an die freie Stirnfläche des ersten Anschlussteils (2a) durch Löten;
k) Prüfen der auf diese Weise geschaffenen Anschlussvorrichtung (2a,2b) auf Dichtigkeit.

2. Verfahren nach Anspruch 1, dadurch gekennzeichnet, dass die zwischen den Teilleitern (1;1,15) eingearbeiteten Nuten (7) mit Streifen (10) ausgefüllt werden, die eine mittlere Kupferschicht (11) aufweisen, die beidseitig mit Lötfolie (12,13) versehen ist.

3. Verfahren nach Anspruch 1, dadurch gekennzeichnet, dass in die besagten Nuten (7) nur Lötfolie eingelegt wird, und dann anschliessend die hohlen Teilleiter (1) aufgeweitet werden, bis sich benachbarte hohle Teilleiter an den Kanten berühren, und dass die verbleibenden Spalte an den Stellen (8), an denen vier hohle Teilleiter (1) zusammentreffen, mit Kupferstiften (14) ausgefüllt werden.

4. Verfahren nach Anspruch 3, dadurch gekennzeichnet, dass die verbleibenden Spalte an den Stellen (8), an denen vier hohle Teilleiter (1) zusammentreffen, vorgängig aufgebohrt werden.

## Claims

1. Method for repairing a connecting device for the electrical connection and for supplying and carrying away the coolant to and from the hollow conductor elements of the stator winding bars of electrical machines, in the case of which connecting device the hollow conductor elements and, if appropriate in the case of a stator winding which also comprises solid conductor elements as well as hollow conductor elements, all the conductor elements are surrounded by a metallic component and are soldered thereto and to one another, which component overhangs the conductor elements forming a water chamber and ends in a connecting fitting for coolant supply and carrying the coolant away, characterized by the following method steps:
a) removal of the existing connecting device (2) from the bar end by inductive heating;
b) cleaning the bar end in the region where the new connecting device is intended to be mounted;
c) material-cutting machining of the end surface of the bar end, especially by milling;
d) introducing narrow slots (7) between adjacent conductor elements (1) into the end of the bar in the transverse direction and vertical direction;
e) pushing on a first connecting part (2a) which is made of copper and completely surrounds the bar end;
f) filling remaining gaps between the first connecting part (2a) and the outer surfaces of the bar end with copper foil and/or solder foil;
g) filling the narrow slots (7), which have been introduced into the end of the bar, with copper foil and/or solder foil (10) or a combination of both;
h) inductive heating of the first connecting part (2a) and of the bar end and soldering with the addition of solder;
i) at least visual inspection of the solder joint thus created;
j) fitting a second connecting part (2b) made of copper to the free end surface of the first connecting part (2a) by soldering;
k) testing the sealing of the connecting device (2a, 2b) created in this way.

2. Method according to Claim 1, characterized in that the slots (7) which are introduced between the conductor elements (1;1,15) are filled with strips (10) which have a central copper layer (11) which is provided with solder foil (12, 13) on both sides.

3. Method according to Claim 1, characterized in that only solder foil is inserted into the said slots (7) and the hollow conductor elements (1) are then subsequently widened until adjacent hollow conductor elements touch at the edges, and in that the remaining gaps are filled with copper pins (14) at the points (8) at which four hollow conductor elements (1) meet.

4. Method according to Claim 3, characterized in that the remaining gaps are drilled in advance at the points (8) at which four hollow conductor elements (1) meet.

## Revendications

1. Procédé pour la réparation d'un dispositif de raccordement pour le raccordement électrique et pour l'alimentation, respectivement l'évacuation, du liquide de refroidissement des segments de conducteurs creux des barres de l'enroulement du stator des machines électriques, dans lequel dispositif de raccordement comportant des segments de conducteurs creux et le cas échéant, dans un enroulement de stator, également des segments de conducteurs massifs en plus des segments de conducteurs creux, tous les segments de conducteurs sont enserrés dans une pièce métallique et soudés à celle-ci et entre eux, cette pièce dépassant les segments de conducteurs en constituant une chambre à eau et se terminant en une armature de raccordement pour l'alimentation du liquide de refroidissement, respectivement l'évacuation du liquide de refroidissement, caractérisé par les étapes du procédé suivantes :
a) enlever le dispositif de raccordement existant (2) de l'extrémité de la barre par chauffage par induction ;
b) nettoyer l'extrémité de la barre dans le périmètre où le nouveau dispositif de raccordement doit être fixé ;
c) usiner la surface frontale de l'extrémité de la barre par enlèvement de matière, en particulier par fraisage ;
d) réaliser de fines entailles (7) dans la partie frontale de la barre en direction verticale et transversale entre des segments de conducteurs (1) voisins ;
e) engager par-dessus une première pièce de raccordement (2a) en cuivre qui enserre complètement l'extrémité de la barre ;
f) remplir les fentes qui subsistent entre la première pièce de raccordement (2a) et les surfaces externes de l'extrémité de la barre avec une feuille de cuivre et/ou une feuille de soudure ;
g) remplir les fines entailles (7) réalisées dans la partie frontale de la barre, avec une feuille de cuivre et/ou une feuille de soudure (10) ou une combinaison des deux ;
h) chauffer par induction la première pièce de raccordement (2a) et l'extrémité de la barre et souder avec apport de produit de soudure ;
i) inspecter au moins visuellement la liaison par soudure ainsi réalisée ;
j) fixer par soudure une seconde pièce de raccordement (2b) en cuivre sur la surface frontale libre de la première pièce de raccordement (2a) ;
k) tester l'étanchéité du dispositif de raccordement (2a, 2b) ainsi obtenu.

2. Procédé selon la revendication 1, caractérisé en ce que les entailles (7) usinées entre les segments de conducteurs (1 ; 1, 15) sont remplies par des bandes (10) qui présentent une couche médiane de cuivre (11) recouverte des deux côtés par une feuille de soudure (12, 13).

3. Procédé selon la revendication 1, caractérisé en ce que seule de la feuille de soudure est mise dans lesdites entailles (7) et qu'ensuite les segments de conducteurs creux (1) sont élargis jusqu'à ce que les conducteurs creux voisins se touchent par leur bord et que les fentes qui subsistent aux emplacements (8) où se rejoignent quatre segments de conducteurs creux (1), soient remplies par des broches en cuivre (14).

4. Procédé selon la revendication 3, caractérisé en ce que les fentes qui subsistent aux emplacements (8) où se rejoignent quatre segments de conducteurs creux (1), sont préalablement percées.
